# EUROPÄISCHE PATENTSCHRIFT

(11) **EP 2 133 130 B1**
(45) Veröffentlichungstag und Bekanntmachung des Hinweises auf die Patenterteilung: **06.10.2010**
(21) Anmeldenummer: 09007561.5
(22) Anmeldetag: 08.06.2009
(51) Int. Cl.: B01D 29/01

(54) **Filtermedium für einen Ölfilter**
Filter medium for an oil filter
Milieu de filtre pour un filtre à huile

(30) Priorität: 10.06.2008 DE 102008027663
(43) Veröffentlichungstag der Anmeldung: 16.12.2009
(73) Patentinhaber: IBS Filtran Kunststoff-/Metallerzeugnisse GmbH, 51597 Morsbach (DE)
(72) Erfinder: Dedering, Michael, 51597 Morsbach-Lichtenberg (DE)
(74) Vertreter: Polypatent

(56) Entgegenhaltungen:
- EP-A- 1 994 974
- US-A- 4 728 422

## Beschreibung

Die Erfindung betrifft ein Filtermedium zur Filtration von Öl, insbesondere im Ölkreislauf von Getrieben und Verbrennungsmaschinen, umfassend eine erste und eine zweite Filtrationslage, wobei die erste Filtrationslage ein offenes Filtrationsmedium umfasst und auf der zweiten, ein dichtes Filtrationsmedium umfassenden Filtrationslage angeordnet ist. Die Erfindung betrifft ferner einen Saugfilter mit einem solchen Filtrationsmedium.

Nachteilig an bisher bekannten Filtermedien im Bereich der Ölfilter ist einerseits, dass bei der Verwendung effizienter Filtermedien insbesondere bei tiefen Temperaturen (Druckfiltermedien) erhebliche Druckverluste bei geringer bis mittlerer Schmutzaufnahmekapazität auftreten. Tiefenfiltrationsmedien, die zwar einen akzeptablen Druckverlust bei hoher Schmutzaufnahmekapazität aufweisen, haben dagegen keine hohe Filtrationseffizienz. Und auch die bekannten Gewebe zu Filtrationszwecken haben nur eine geringe Schmutzaufnahmekapazität und erreichen zudem keine hohe Effizienz. Speziell im Bereich der Saugfilter (maximal erzielbarer Unterdruck 1 bar) stehen die vorstehenden Probleme effizienten und langandauernden Filtrationsergebnissen entgegen.

Aufgabe der Erfindung ist es somit, ein Filtrationsmedium anzugeben, welches die vorstehend genannten Nachteile überwindet und sich insbesondere für den Einsatz im Bereich der Saugfilter eignet. Eine ähnliche Vorrichtung ist in der nachveröffentlichten EP 1 994 974 offenbart.

Die Lösung der Aufgabe erfolgt mit einem Filtermedium gemäß dem Patentanspruch 1. Vorteilhafte Weiterbildungen sind in den abhängigen Patentansprüchen angegeben. Eine Besonders vorteilhafte Verwendung besteht ferner in dem Einsatz des erfindungsgemäßen Filtrationsmediums in einem Saugfilter.

Erfindungsgemäß ist zur Lösung der Aufgabe zwischen der ersten und der zweiten Filtrationslage eine Zwischenkammer angeordnet, so dass die erste und die zweite Filtrationslage im Bereich der Zwischenkammer in Filtrationsrichtung zueinander beabstandet sind. Der Grundgedanke der Erfindung besteht somit in dem sandwichartigen Aufbau des Filtermediums, wobei eine erste Filtrationslage zu einer zweiten Filtrationslage über einen Zwischenraum, der im Betrieb mit Öl gefüllt ist, beabstandet ist. Wesentlich ist dabei, dass der Zwischenraum nicht durch ein loses Übereinanderlegen der ersten und der zweiten Filtrationslage erhalten wird, sondern die beiden Lagen einen vorher festgelegten und auch im betrieblichen Einsatz erhalten bleibenden Abstand in Filtrationsrichtung zueinander haben. Die erste Filtrationslage umfasst dabei ein offenes Filtermedium und die zweite Filtrationslage ein dichtes Filtermedium. Die zweite Filtrationslage besteht somit aus einem dichteren Filtermedium als die erste Filtrationslage.

Vorzugsweise weist das Filtrationsmedium zum Erhalt der Zwischenkammer ein Rahmenelement auf, welches zwischen der ersten und der zweiten Filtrationslage angeordnet ist. Dabei ist das Rahmenelement in seinen Abmessungen in der Weise ausgelegt, dass die erste und die zweite Filtrationslage im Betrieb des Filtermediums nicht, beispielsweise durch ggf. mögliche Dehnbarkeiten der Filtermaterialien, aufeinander aufliegen, sondern vielmehr auch im Betrieb die Beabstandung der beiden Filtrationslagen zueinander erhalten bleibt. Das Rahmenelement kann dabei selbstverständlich einteilig oder mehrteilig sein.

Herausragend hinsichtlich Zuverlässigkeit und Effizienz ist die Verwendung eines Rahmenelementes, welches mehrere Zwischenkammern bildet. Dabei umfasst das Filtrationsmedium somit mehrere in der Fläche nebeneinander liegende Zwischenkammern. Dies ermöglicht insbesondere besonders große und in ihrer Kontur variable Filterflächen mit dem erfindungsgemäßen Filtermedium zu erhalten.

Vorzugsweise ist pro Zwischenkammer jeweils eine Durchtrittslochung in der zweiten, ein dichtes Filtrationsmedium umfassenden Filtrationslage angeordnet. Diese grundsätzlich aus dem Stand der Technik bekannte Möglichkeit ermöglicht den Einsatz des Filtrationsmediums über einen weitreichenden Viskositätsbereich hinweg, da insbesondere im Falle hoher Viskositäten, wie es beispielsweise bei tiefen Temperaturen der Fall ist, das Öl nicht vollständig über die zweite, dichte Filtrationslage filtriert.

Das erfindungsgemäße Filtrationsmedium entfaltet seine vorteilhafte Wirkungen besonders eindrucksvoll im Einsatz in einem Saugfilter mit einem Filtermedium nach einem der vorhergehenden Ansprüche.

Zusammenfassend führt die spezielle erfindungsgemäße Anordnung im Ergebnis zu folgenden Vorteilen:
1. Geringer Druckverlust bei niedrigen Strömungsgeschwindigkeiten und hohen Viskositäten (z.B. -30°C).
2. Hohe Effizienz bei niedrigen Viskositäten (<0.01 Pas) und höherer Durchströmungsgeschwindigkeit.
3. Inhomogene Beladung des offenen Filtermediums und homogene Beladung des dichten Filtermediums.
4. Reduzierte Bauhöhe um ca. 100%-300% (im Vergleich zu herkömmlichen mehrlagigen Filtermedien im Bereich der Ölfilter) auf ca. 2-3 mm sind möglich bei gleicher oder sogar verbesserter Performance.
5. Das genaue Verhalten des Filtermediums kann individuell auf den jeweiligen Anwendungsfall (Kundenwunsch) optimiert ausgelegt werden. Eine geschickte Auswahl der verschiedenen Filtermedien, Lochdurchmesser und Abstandsgitterauslegung und deren Verhältnisse ist hierzu notwendig und möglich. Durch weitere Filterlagen mit Löchern und weiteren Abstandsgittern können die Kapazität und Filtrationseffizienz weiter optimiert werden.
6. Der sandwichartige Aufbau verbessert maßgeblich die Luftabführung im Filter und somit unerwünschte Kavitationseffekte für die Pumpe. Im speziellen geschieht dies durch den Triebstrahl in jedem Feld bzw. Zwischenkammer, der für die notwendige Geschwindigkeit zur Luftabführung durch die erste Lage sorgt. Die Luftabführung kann durch die Verbindung der ersten Lage mit dem Abstandsgitter weiter optimiert werden. Die Verbindung verhindert ein Querströmen zwischen den einzelnen Zwischenkammern und es kann zu keiner Luftansammlung unterhalb der ersten Lage kommen. Auf die Filtration hat diese Verbindung keinen Einfluss.
7. Die kompakte Bauform ermöglicht die Herstellung als Flächenware.
8. Die Kompakte Bauform ermöglicht die Auslegung eines Filters als Taschenfilters.
9. Die Kompakte Bauform ermöglicht die Auslegung als plissierter Filter.

Nachfolgend wird die Erfindung anhand eines in der Zeichnung dargestellten Ausführungsbeispiels weiter beschrieben. Es zeigen schematisch:
- Fig. 1: Perspektivische Seitendurchsicht auf ein Filtermedium;
- Fig. 2: Draufsicht auf das Abstandsgitter und die erste Filtrationslage des Filtermediums aus Fig. 1;
- Fig. 3: Schnittansicht durch das Filtermedium aus Fig. 1;
- Fig. 4: Gegenüberstellung der Partikelreduzierung zur Partikelgröße; und
- Fig. 5: Gegenüberstellung des Druckabfalls zum Durchfluss.

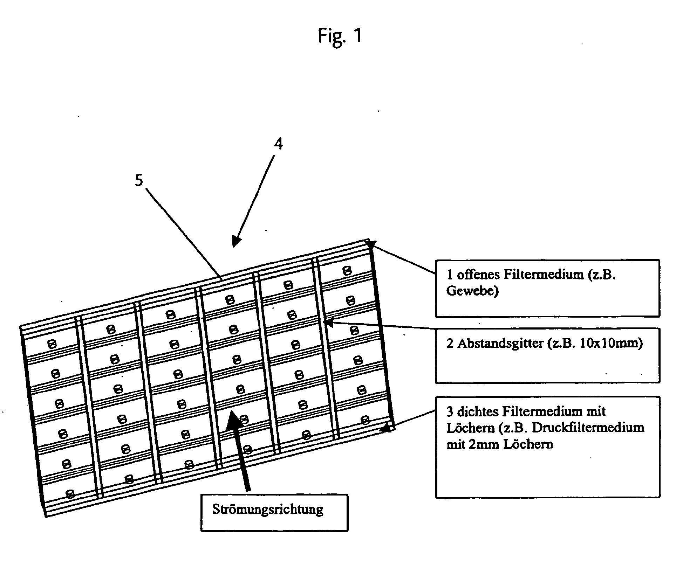

Gemäß Fig. 1 umfasst das Filtrationsmedium 4 eine erste Filtrationslage 1 aus einem offenen Filtermedium, ein Abstandsgitter 2, das die Zwischenkammern 5 in der Fläche des Filtrationsmediums 4 bildet, und eine zweite Filtrationslage 3 aus einem dichten Filtermedium, wobei pro Zwischenkammer eine Durchtrittsöffnung 6 in der zweiten Filtrationslage 3 angeordnet ist. Die erste Filtrationslage 1, das die Zwischenkammern 5 bildende Abstandsgitter 2 und die zweite Filtrationslage 3 sind sandwichartig aufeinanderliegend angeordnet, wobei das Abstandsgitter zwischen den beiden Filtrationslagen 1 und 3 angeordnet ist und diese zueinander beabstandet.

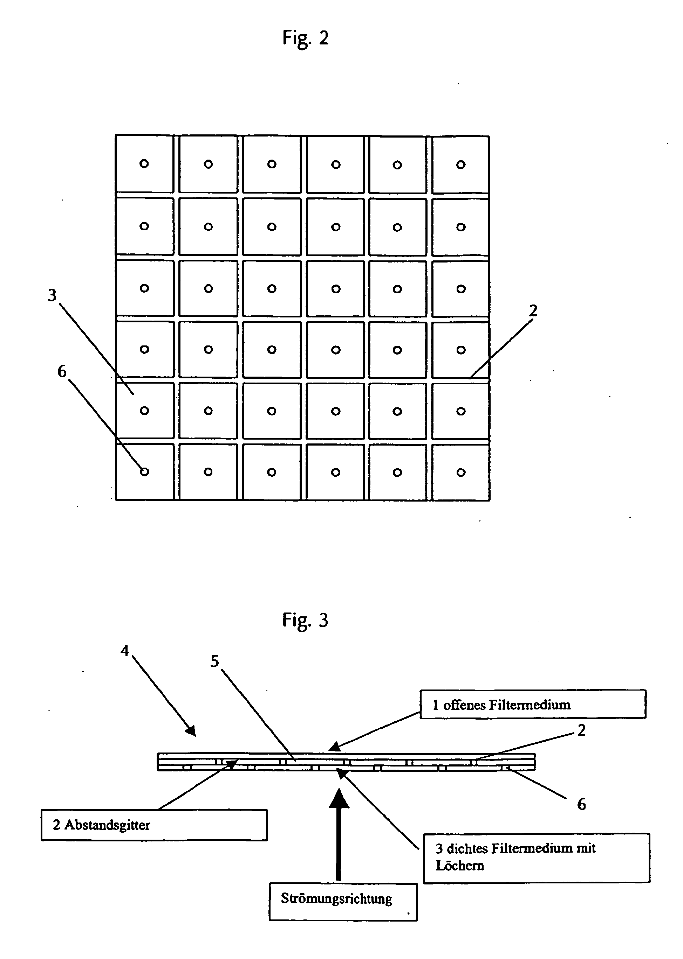

Dieser Sandwichaufbau geht besonders gut aus Fig. 3 hervor. Durch die Anordnung des Abstandsgitters 2 zwischen den beiden Lagen 1 und 3 werden die Zwischenkammern 5 gebildet, durch die das das Filtermedium 4 durchlaufende Öl von der einen Filtrationslage zur anderen Filtrationslage gelangt. Im konkreten Ausführungsbeispiel durchströmt das Öl gemäß den Figuren 1 und 3 das Filtermedium 4 von der zweiten Filtrationslage 3 kommend und passiert somit zunächst das dichte Filtermedium, anschließend die Zwischenkammer 5 und verlässt das Filtrationsmedium 4 schließlich über die erste Filtrationslage 1. Grundsätzlich ist es jedoch auch möglich, die Durchströmung des Filtrationsmediums in entgegen gesetzter Richtung vorzunehmen.

Fig. 2 verdeutlicht die Ausbildung des Abstandsgitters 4. Diese besteht aus Längs- und Querstreben, die zusammen die quadratischen Zwischenkammern 5 bilden. Fig. 2 verdeutlicht ferner die Positionierung der Durchtrittsöffnungen 6 relativ zu den Zwischenkammern 5. Pro Zwischenkammer 5 ist eine Durchtrittsöffnung 6 in der zweiten Filtrationslage 3 vorgesehen, die jeweils zentral bezüglich der Zwischenkammer 5 in der zweiten Filtrationslage 3 angeordnet ist.

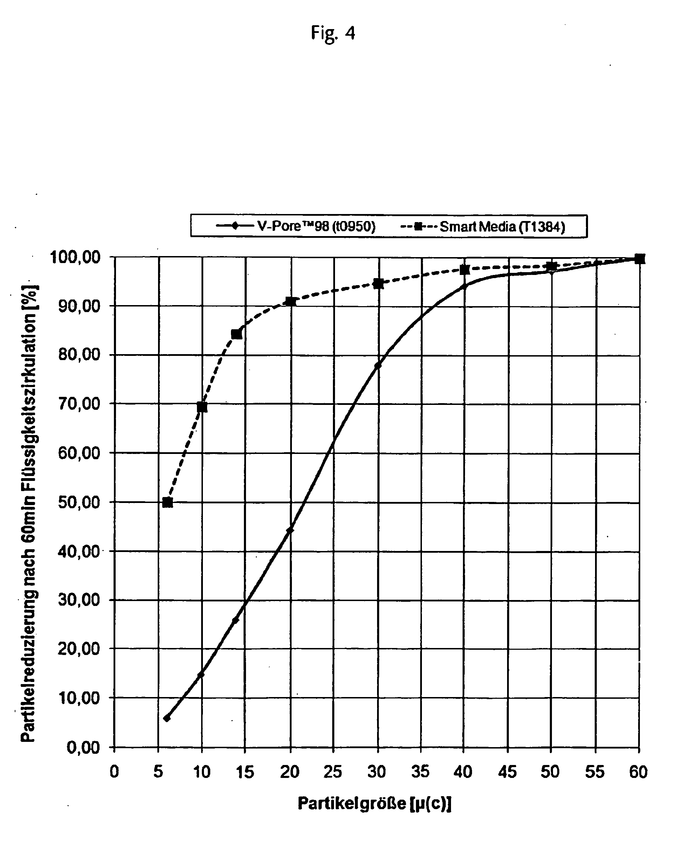

Fig. 4 verdeutlicht die überlegene Partikelreduzierung des erfindungsgemäßen Filtermediums ("SmartMedia") gegenüber einem Standardsaugfiltermedium ("V-Pore 98"). Dabei wird deutlich, dass insbesondere im angegebenen niedrigen Partikelgrößenbereich zwischen 5 bis 40 µ(c) erheblich verbesserte Partikelreduzierungen erhalten werden.

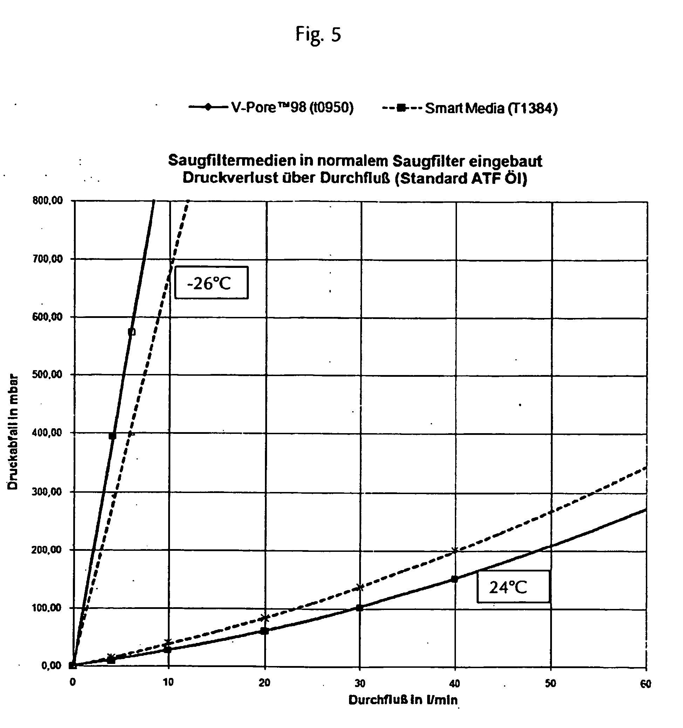

Fig. 5 schließlich veranschaulicht die vorteilhaften Eigenschaften des erfindungsgemäßen Filtrationsmediums bzgl. des Druckabfalls im Verhältnis zum Durchfluss, wobei in Fig. 5 abermals der Vergleich zu einem Standardsaugfiltermedium ("V-Pore 98") und bei Temperaturen von 24 °C und -26 °C erfolgt.

Nachfolgend wird die physikalische Funktionsweise des erfindungsgemäßen Filtermediums näher erläutert.

A) Zustand niedrige Ölviskosität, hohe Strömungsgeschwindigkeit (warmes Öl) Durch das offene Filtermedium (erste Filtrationslage 1) wird der Druck nahezu ohne Verlust direkt in die Zwischenkammer übertragen (vgl. Gesetz von Darcy). Der Druck in der Zwischenkammer 5 wird bestimmt durch den Treibstrahl des aus der Bohrung entstehenden Staudruck, den Verlust in der Bohrung (Strömung durch ein Rohr) und den Verlust in der Zwischenkammer 5 ("Strömung zwischen 2 Platten"). Der Staudruck bestimmt in diesem Zustand maßgeblich den Unterdruck in der Zwischenkammer 5. Je kleiner das Loch, desto größer der Staudruck und desto höher der Unterdruck in der Zwischenkammer 5. Dieser Unterdruck in der Zwischenkammer 5 sorgt dafür, dass ein entsprechender Anteil durch das dichte Filtermedium (zweite Filtrationslage 3) strömt ("Gesetz von Darcy"). Der Lochdurchmesser (Staudruck) bestimmt somit den Anteil der durch das dichte Filtermedium (zweite Filtrationslage 3) strömt. Der Zusammenhang ist nicht linear, sondern quadratisch.

B) Zustand hohe Ölviskosität, niedrige Strömungsgeschwindigkeit (kaltes Öl) Durch das offene Filtermedium (erste Filtrationslage 1) wird der Druck mit geringem Verlust in die Zwischenkammer 5 übertragen, (Gesetz von Darcy). Der Druck in der Zwischenkammer 5 wird bestimmt durch den Treibstrahl des aus der Bohrung entstehenden Staudrucks, den Verlust in der Bohrung (Strömung durch ein Rohr) und den Verlust in der Zwischenkammer 5 (Strömung zwischen 2 Platten). Der Bohrungsdurchmesser und die Kammerhöhe bestimmen in diesem Zustand maßgeblich den Unterdruck in der Zwischenkammer. Je kleiner das Loch und je flacher die Kammer, desto höher der Gesamtdruckverlust des Filtermediums. In diesem Zustand wird das dichte Filtermedium (3) nahezu völlig umgangen (Gesetzt von Darcy). Der Lochdurchmesser, Lochlänge und die Kammerhöhe bestimmen somit den Gesamtverlust des gesamten Filtermediums.

Ein Feld der ersten Lage, dessen Fläche im Wesentlichen mit der Fläche einer Zwischenkammer 5 korrespondiert, weist im Anwendungsfall als Saugfilter vorzugsweise eine Größe von 10 mm x 10 mm auf. Für Druckfiltration ist vorzugsweise eine Feldgröße von 7 mm x 7 mm zu wählen. Das Feld ist also vorzugsweise quadratisch aufgebaut, wobei aber auch andere Formen, beispielsweise ein Rechteck, denkbar sind. Bei diesen bevorzugten Feldgrößen weist das Abstandsgitter 2 eine Gitterhöhe von vorzugsweise 1,5 bis 2,5 mm auf. Es hat sich gezeigt, dass bei zu geringer Gitterhöhe erhöhte Strömungsverluste auftreten können.

Es hat sich ferner gezeigt, dass ein Lochdurchmesser zwischen 1 und 3 mm für den gesamten Saugfiltrationsbereich ausreichend ist. Für Druckfiltration ist vorzugsweise ein Lochdurchmesser zwischen 0,1 und 3 mm zu wählen.

Als Feinfiltermedien kommen im Prinzip beliebige Materialien in Frage. Vorzugsweise kommen Filtermedien mit einem Beta-Wert im Bereich von Beta 5 größer 1000 bis Beta 35 größer 1000 zum Einsatz. Auch bei Grobfiltermedien gibt es eine große Auswahl. Hierbei sind insbesondere das zu schützende Bauteil sowie die kritische Partikelgröße ausschlaggebend.

Der Viskositätsbereich beträgt vorzugsweise 0,001 bis 30 Pa*s. Dabei werden Strömungsgeschwindigkeiten zwischen 0 und 100 mm/s oder höher beobachtet.

Als Einsatzgebiete des erfindungsgemäßen Filtermediums kommen insbesondere Umgebungen in Frage, in denen starke Viskositätsschwankungen und Mehrfach-Durchströmung oft vorkommen, wie beispielsweise Getriebe mit Ventilen (zum Schutz der Ventile, Pumpe, Lager, Automatikgetriebe), Großgetriebe (Windkraftanlage), Differentialgetriebe, Servolenkung oder Filtration im Motorenbereich, Luft- und Raumfahrt. Es ist auch Wasserfiltration denkbar, auch wenn hierbei kaum Viskositätsschwankungen auftreten.

## Patentansprüche

1. Filtermedium (4) zur Filtration von Öl, insbesondere im Ölkreislauf von Getrieben und Verbrennungsmaschinen, umfassend eine erste (1) und eine zweite Filtrationslage (3), wobei die erste Filtrationslage (1) ein offenes Grobfiltrationsmedium umfasst und auf der zweiten, ein dichtes Feinfiltrationsmedium umfassenden Filtrationslage (3) angeordnet ist, wobei
zwischen der ersten (1) und der zweiten Filtrationslage (3) ein Rahmenelement angeordnet ist, so dass die erste (1) und die zweite Filtrationslage (3) in Filtrationsrichtung mit festgelegtem Abstand zueinander beabstandet sind, wobei das Rahmenelement mehrere in der Fläche nebeneinander liegende Zwischenkammern (5) zwischen der ersten (1) und der zweiten Filtrationslage (3) bildet, und wobei pro Zwischenkammer (5) jeweils eine Durchtrittslochung (6) in der zweiten, ein dichtes Feinfiltrationsmedium umfassenden Filtrationslage (3) angeordnet ist.

2. Saugfilter mit einem Filtermedium (4) nach einem der vorhergehenden Ansprüche.

## Claims

1. Filter medium (4) for the filtration of oil, in particular in the oil circulation system of transmission systems and internal combustion engines, comprising a first (1) and a second filtration layer (3), the first filtration layer (1) comprising an open, coarse filtration medium and being arranged on the second filtration layer (3) comprising a dense, fine filtration medium, wherein
a frame element is arranged between the first (1) and the second filtration layer (3) so that the first (1) and the second filtration layer (3) are arranged at a fixed distance from one another in the filtration direction, wherein the frame element forms a plurality of intermediate chambers (5) located next to one another in the surface between the first (1) and the second filtration layer (3), and wherein, for each intermediate chamber (5), a through-hole (6) is arranged in the second filtration layer (3) comprising a dense, fine filtration medium.

2. Suction filter having a filter medium (4) according to any one of the preceding claims.

## Revendications

1. Moyen filtrant (4) pour la filtration d'huile, en particulier dans le circuit d'huile de boîtes de vitesses et de moteurs à combustion interne, comprenant une première couche de filtration (1) et une seconde couche de filtration (3), la première couche de filtration (1) comprenant un moyen ouvert de filtration grossière et étant disposée sur la seconde couche de filtration (3) comprenant un moyen compact de filtration fine, un élément cadre étant disposé entre la première couche de filtration (1) et la seconde couche de filtration (3), de sorte que la première couche de filtration (1) et la seconde couche de filtration (3) sont espacées dans le sens de filtration avec un espacement défini, l'élément cadre formant plusieurs chambres intermédiaires (5) juxtaposées dans la surface entre la première couche de filtration (1) et la seconde couche de filtration (3), et à chaque fois une perforation de passage (6) par chambre intermédiaire (5) étant disposée dans la seconde couche de filtration (3) comprenant un moyen compact de filtration fine.

2. Filtre aspirant comprenant un moyen filtrant (4) selon l'une quelconque des revendications précédentes.
